# FASCICULE DE BREVET EUROPEEN

(11) **EP 0 901 428 B1**
(45) Date de publication et mention de la délivrance du brevet: **02.08.2000**
(21) Numéro de dépôt: 97926062.7
(22) Date de dépôt: 30.05.1997
(51) Int. Cl.: B60P 3/08

(54) **DISPOSITIF DE MANOEUVRE D'UNE STRUCTURE PORTEUSE A PARTIR D'UN COUPLE DE VIS PORTANT CHACUNE UN ECROU DE TRANSLATION**
BETÄTIGUNGSVORRICHTUNG FÜR EINE HEBEKONSTRUKTION MIT ZWEI SPINDELN, JEDE MIT EINER SPINDELMUTTER
CONTROL EQUIPMENT DEVICE FOR A FRAME STRUCTURE BASED ON A SCREW PAIR, EACH SCREW BEARING A DISPLACING NUT

(30) Priorité: 07.06.1996 FR 9607253
(43) Date de publication de la demande: 17.03.1999
(73) Titulaire: LOHR INDUSTRIE, 67980 Hangenbieten (FR)
(72) Inventeur: ANDRE, Jean-Luc, F-67210 Obernai (FR); KLOTZ, Martin, F-67380 Lingolsheim (FR)
(74) Mandataire: Metz, Paul
(86) Numéro de dépôt international: FR9700945
(87) Numéro de publication internationale: WO9747494

(56) Documents cités:
- EP-A- 0 001 364
- EP-A- 0 518 795
- DE-A- 3 147 591
- DE-A- 3 920 323
- DE-U- 9 005 043
- FR-A- 2 181 246
- GB-A- 927 361
- US-A- 4 822 222

## Description

La présente invention se rapporte à un dispositif de manoeuvre d'une structure porteuse en levage-abaissement ou poussée-traction notamment pour une unité routière porte-véhicules.

Les vis des poteaux de levage utilisées en couples notamment pour le transport de voitures chargées sur des plates-formes ou des plateaux portés par ces vis sont commandées classiquement par un ou plusieurs moteur(s) à énergie mécanique, électrique ou hydraulique monté(s) entre les poteaux ou à la base d'un poteau de chaque couple. DE 31 47 591 A montre les caractéristiques du préamble de la revendication 1.

Des exemples de réalisation sont décrits dans les publications des brevets français n° 2.403.234 et n° 2.432.403 au nom de la Société LOHR.

Dans ces brevets, les vis des poteaux-supports préférentiellement au nombre de quatre sont actionnées par un moteur unique pour les quatre poteaux ou un moteur propre à chaque couple.

Dans le cas d'un moteur unique pour les quatres vis, le système de transmission s'avère étendu et complexe car il faut transmettre le mouvement à quatre vis éloignées les unes des autres.

Lorsqu'un moteur est associé à chaque couple de poteaux, on profite de l'indépendance de mouvement entre les couples, ce qui permet de réaliser des mouvements d'inclinaison de la plate-forme ou du plateau porté par les quatre poteaux.

Bien que la simplification qui consiste à placer un moteur hydraulique pour chaque couple de poteaux soit intéressante, elle suppose l'utilisation d'au moins une liaison cinématique transversale avec renvoi d'angle pour transmettre le mouvement d'actionnement à la base du ou des poteau(x) homologue(s).

Outre la complexité mécanique de ce type d'entraînement, il faut rajouter son coût et différents inconvénients supplémentaires plus ou moins importants. On mentionne d'abord le mauvais rendement de la liaison cinématique transversale et notamment celui du ou des renvoi(s) d'angle.

Il faut considérer ensuite les travaux supplémentaires à effectuer sur la carrosserie pour le passage de la liaison transversale du système de levage.

Par ailleurs, l'encombrement de cette liaison rend indisponible le volume situé sous et entre les poteaux.

De plus, l'entraînement mécanique occasionne un bruit non négligeable pouvant représenter des nuisances sonores, surtout la nuit lors des manoeuvres de levage et d'abaissement.

La présente invention a pour but de remédier à ces différents inconvénients.

A cet effet, le problème résolu par l'invention est celui d'un moindre encombrement, d'un entraînement silencieux et sans vibrations et d'un meilleur rendement mécanique, et d'une plus grande fiabilité tout cela à un coût moindre par rapport aux solutions antérieures.

Pour ce faire, l'invention se rapporte à un dispositif de manoeuvre d'une structure porteuse en levage-abaissement ou poussée-traction notamment pour une unité routière porte-véhicules, dispositif formé d'un couple de vis portant chacune un écrou de translation prisonnier à l'intérieur d'une fourche se déplaçant le long de chaque poteau d'un couple de poteaux, caractérisé en ce que les vis comportent chacune une butée haute et une butée basse et un indicateur ou un détecteur de position de référence, vis comportant également chacune à une de leurs extrémités un moteur hydraulique, les moteurs hydrauliques étant alimentés en série à partir d'une même source de pression et shuntés chacun par une dérivation comportant chacune un organe hydraulique de dérivation à ouverture automatique ou commandée pour rendre la dérivation passante pour le fluide hydraulique dans le cas notamment d'un arrêt ou d'un blocage du moteur hydraulique correspondant.

Les avantages résultent de la présence de deux moteurs hydrauliques, l'un à la base de chaque vis, de l'alimentation en série des moteurs et de la présence d'une dérivation dans l'alimentation de chaque moteur présentant un organe hydraulique de dérivation à ouverture automatique ou commandée.

On peut citer ici le gain en encombrement, et la disponibilité du volume inférieur situé entre les poteaux ainsi qu'un plus faible prix de revient et coût d'installation et de construction.

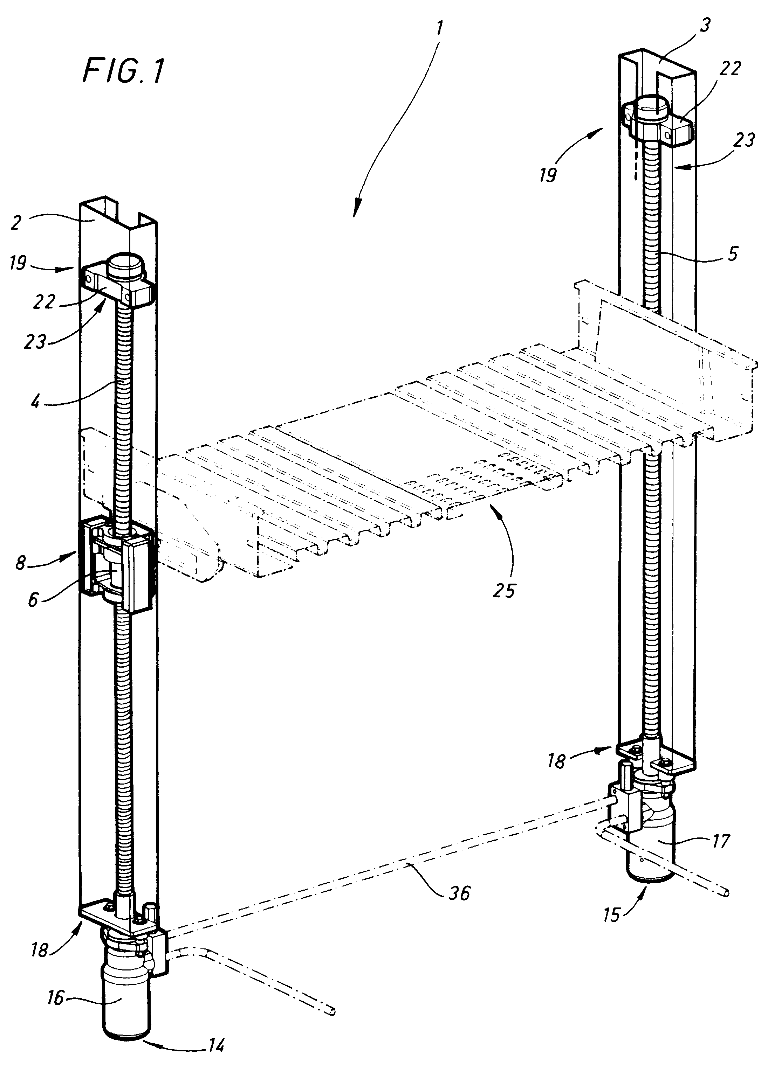

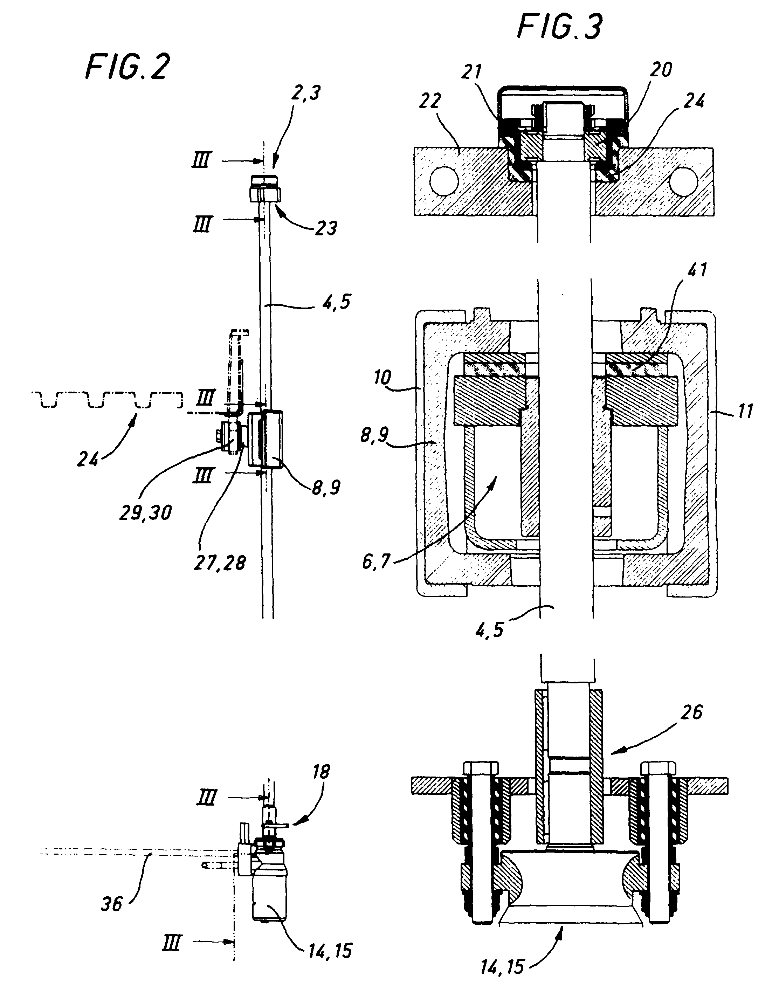

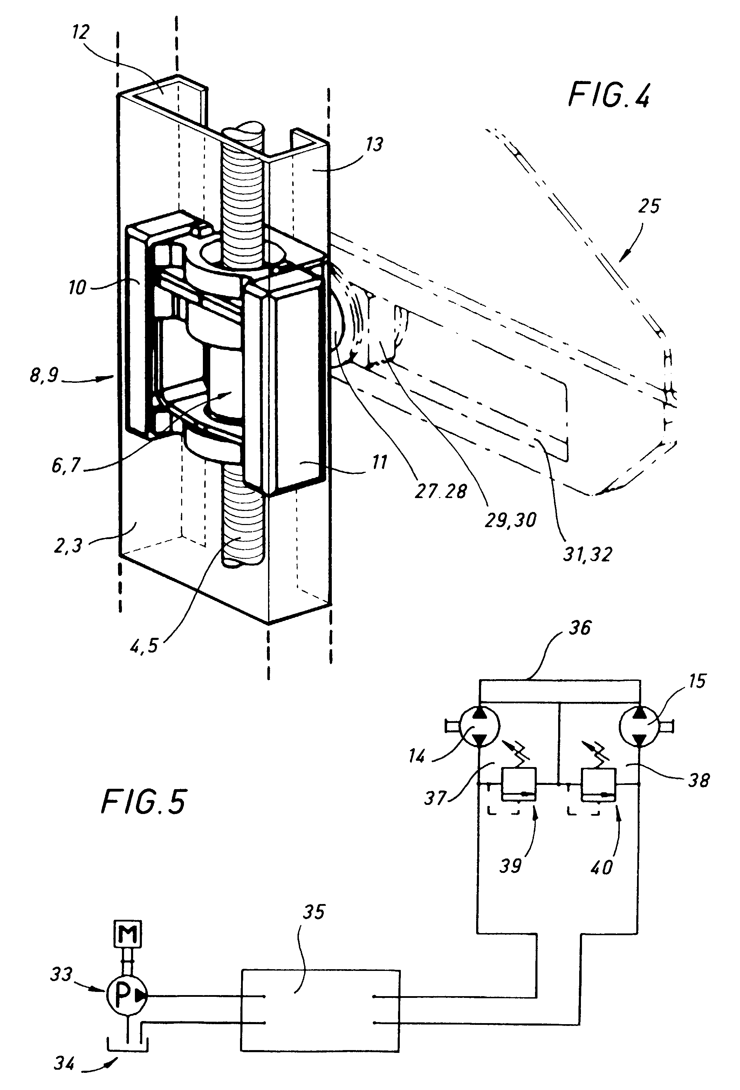

D'autres caractéristiques et avantages de l'invention apparaîtront dans la description qui suit, donnée à titre d'exemple et accompagnée des dessins dans lesquels :
. la figure 1 est une vue schématique montrant le dispositif de levage dans son ensemble à vis et poteau avec entraînement inférieur par moteurs hydrauliques ;
. la figure 2 est une vue simplifiée de face montrant les emplacements des coupes longitudinales selon les lignes III-III ;
. la figure 3 est une vue représentant l'ensemble d'un poteau en coupe longitudinale selon les lignes III-III de la figure 2 ;
. la figure 4 est une vue agrandie en perspective d'une fourche avec son écrou de translation ;
. la figure 5 est le schéma du raccordement hydraulique d'alimentation des moteurs.

En référence à la figure 1, l'invention se compose d'un couple 1 de deux poteaux de levage 2,3 verticaux, inclinés ou horizontaux, portant et renfermant chacun une vis motrice 4,5 de préférence suspendue, sur chacune desquelles est monté un écrou de translation 6,7 relié à une fourche 8,9 lui servant de cage.

Les fourches 8,9 comportent préférentiellement chacune deux patins latéraux 10,11 pour leur déplacement à glissement le long des poteaux dont les chants intérieurs longitudinaux tels que 12,13 leur servent de guide.

Chacune des vis de chaque poteau est entraînée en rotation par un moteur hydraulique 14,15 à bloc-moteur 16,17 prévu à l'une des extrémités basse 18 ou haute 19 des vis, dans la prolongation du corps linéaire de celles-ci.

Les vis 4,5 sont montées dans les poteaux par une de leur extrémité par l'intermédiaire d'un palier-butée 20, par exemple à billes. Ce palier-butée 20 ou le moteur 14,15 lorsqu'il est en position haute est monté sur des blocs élastiques tels que 21 en liaison avec une pièce-support 22 servant de butée haute 23 avec interposition d'une pièce intermédiaire élastique 24.

Chaque fourche 8,9 constitue l'interface entre chaque écrou de translation 6,7 et une structure quelconque de liaison, de préférence une structure porteuse telle que celle référencée par 25 sur la figure 1 qui peut être du type plateau, plate-forme ou autre de forme différente moins étendue ou localisée soutenant une charge, par exemple portée par une unité routière de transport de véhicules.

Le montage des vis 4,5 est réalisé de telle façon qu'elles sont suspendues à amortissement élastique omnidirectionnel à l'une de leurs extrémités et guidées avec un jeu axial à l'autre extrémité, par exemple par une extrémité conformée en arbre cannelé sur laquelle est monté un manchon cannelé 26 de couplage venant en prise avec un élément d'entraînement du moteur hydraulique.

On désignera ci-après par le terme poteau(x) la ou les structure(s) métallique(s) portant au moins par une extrémité et protégeant les vis. Il doit être bien compris que l'on utilisera ce terme tout au long du descriptif sans aucune volonté de limitation pour désigner aussi bien des vis verticales que des vis horizontales ou inclinées. Ainsi aucune limitation particulière en ce qui concerne l'inclinaison et la position des vis ne doit être recherchée dans ce terme.

Il est envisagé, parmi les différentes applications possibles, le déplacement direct ou par un moyen intermédiaire d'une structure par exemple porteuse en inclinaison ou en basculement d'un portique, d'une rampe de gerbage ou équivalent. Selon cette application, les poteaux se trouvent dans une position horizontale ou légèrement inclinée.

La structure porteuse est maintenue et rendue inclinable par des liaisons adaptées par exemple à axes-pivots 27,28 faisant saillie des fourches 8,9 portant par exemple un galet ou un patin 29,30 et par des moyens adaptés prévus le long de la structure porteuse 25.

Bien entendu, dans le cas de plusieurs couples de poteaux, divers moyens additionnels connus peuvent être prévus pour réaliser simultanément la translation avec inclinaison ou l'inclinaison seule de la structure porteuse, par exemple comme représenté sur les figures des chemins de roulement ou de glissement 31,32 présents sur les flancs de cette structure sur lesquels les galets d'extrémité des axes-pivots 27,28 portent à glissement ou à roulement.

Chaque vis motrice de levage 4,5 est entraînée directement par un moteur hydraulique 14,15 dont les blocs-moteurs 16,17 sont logés en partie basse ou haute des poteaux dans l'alignement des vis de levage.

Les moteurs hydrauliques 14,15 sont alimentés à partir d'une même source 33 de fluide hydraulique sous pression, par exemple une pompe entraînée par un moteur M ou une prise de force ou autre générateur de fluide sous pression, à travers un organe de commande unique d'entrée de circuit distributeur ou autre commun aux deux moteurs.

L'alimentation hydraulique des moteurs 14,15 s'effectue par un branchement en série, c'est-à-dire en boucle, par un conduit unique à partir de la source de pression 33 avec retour à la bâche 34 à travers un organe de commande générale, par exemple un distributeur 35. La liaison entre les moteurs s'effectue donc par un simple conduit d'alimentation 36. Il s'agit conformément à l'invention de la seule liaison existant entre les deux moteurs.

L'emplacement occupé entre les poteaux par la liaison mécanique des dispositifs antérieurs devient ainsi disponible pour un autre usage.

Les moteurs 14,15 sont shuntés chacun par une dérivation hydraulique 37,38 comprenant un organe hydraulique de dérivation 39,40 à ouverture soit automatique, par exemple un limiteur de pression, soit déclenchée en ouverture totale, partielle ou progressive par une commande extérieure, par exemple une électrovanne ou tout autre composant hydraulique équivalent. L'ouverture peut être commandée par un déclencheur à partir de la détection physique d'une position de référence marquée par un indicateur. Elle peut également être commandée par la comparaison en continu d'une grandeur représentative de la position instantanée par l'intermédiaire d'une grandeur physique variable atteignant une valeur de consigne représentative de la position de référence. On peut envisager aussi tout autre moyen équivalent mettant par exemple en oeuvre une ou des butées mécaniques fixes ou déplaçables escamotables ou un détecteur par induction, par contact, par microrupteur ou autre moyen de détection ou d'approche, par exemple un détecteur de proximité ou un indicateur de déplacement de la fourche ou de l'écrou, un index ou une détection électrique, électronique, informatique résultant d'un calcul, exploitable pour la commande en déclenchement d'ouverture totale, partielle ou progressive du composant hydraulique de dérivation 39,40.

Les composants hydrauliques de dérivation 39,40 peuvent être des limiteurs de pression réalisés par exemple sous la forme de clapets anti-retour tarés ou tout autre composant de fonction équivalente, c'est-à-dire à ouverture automatique sous certaines conditions de pression/débit.

On peut également envisager d'autres composants hydrauliques de dérivation du type vannes, électrovannes ou tout autre, commandables à distance et à ouverture variable, partielle, progressive ou proportionnelle.

L'écrou 6,7 est maintenu flottant avec des jeux fonctionnels de la façon suivante dans la fourche 8,9 lui servant de cage.

La face supérieure et/ou inférieure de chaque écrou est en contact avec la partie supérieure de la cage de la fourche traversée par la vis par une pièce 41 de matière élastomère. La liaison élastique avec la cage de la fourche peut être maintenue mécaniquement par une cage interne.

Cette pièce élastique 41 de liaison ou de contact évite le coincement et donc le blocage brutal de l'écrou dans la cage et permet de diminuer l'usure par une meilleure portée de l'écrou sur la vis. Les sautillements et les vibrations sont amortis, voire supprimés.

Comme on peut également le remarquer sur la figure 3, la vis est suspendue par son extrémité haute dans la pièce de support 22 servant de butée haute 23 à l'aide du bloc élastique 21 lui autorisant un certain jeu axial.

L'extrémité de chaque vis 4,5 est entraînée directement par son moteur hydraulique 14,15 qui est monté dans son prolongement. Afin de permettre le jeu axial souhaité, cette extrémité est conformée selon un axe cannelé qui s'engage par le manchon cannelé d'union 26 dans une pièce complémentaire d'entraînement constituant la sortie mécanique du moteur hydraulique.

Le couplage d'entraînement mécanique peut être également réalisé par l'intermédiaire d'un joint homocinétique.

Le branchement en série des deux moteurs hydrauliques 14,15 permet d'envisager un mouvement sensiblement synchrone de levage des deux écrous 6,7 de translation.

En raison notamment des disparités liées aux fuites internes des moteurs, qui peuvent évoluer dans le temps, il n'est pas possible de garantir un déplacement parfaitement synchrone des deux fourches 8,9.

Ces disparités peuvent entraîner après de nombreuses manoeuvres un décalage entre les positions des fourches droite et gauche se traduisant par une mise en biais de la structure porteuse. Ces disparités peuvent être compensées par un circuit de remise à zéro à partir au moins d'une butée intermédiaire ou de fin de course ou d'au moins une position de référence pour chaque fourche provoquant le blocage ou la commande en arrêt ou en ralentissement du moteur correspondant à la fourche en avance, c'est-à-dire dans le cas d'une butée celle des fourches qui arrivera la première en contact avec la butée définissant la position de référence.

L'arrêt du moteur est commandé par un détecteur qui active en ouverture totale, partielle ou progressive l'organe hydraulique de dérivation lors de l'approche ou au moment du franchissement de la position de référence. L'autre moteur continuera à entraîner la vis correspondante jusqu'à rattraper la position de la fourche opposée.

Les positions de référence peuvent être matérialisées par des butées intermédiaires sous la forme d'une pièce fixe ou déplaçable mais toujours escamotable. La fonction de position de référence peut également être remplie par un détecteur de position, de proximité ou de passage ou par comparaison avec une valeur de consigne.

Ainsi, la pièce formant butée peut être remplacée par un détecteur placé sur le trajet de l'écrou de translation 6,7 ou de la fourche 8,9 qui portera un élément détectable. Il peut s'agir aussi de l'inverse, c'est-à-dire d'un détecteur placé dans l'écrou de translation ou dans la fourche.

On peut envisager de façon générale un indicateur physique ou fourni par la variation d'une valeur donnée par un capteur. Par exemple, le nombre de tours de la vis constitue une information sur la position de l'écrou de translation. Cette information pourra être exploitée pour commander l'ouverture de l'organe de dérivation placé dans la dérivation au moment où le nombre de tours de vis correspondant à la position de butée est atteint.

Le fonctionnement type avec butée physique de position est caractérisé en ce que l'écrou qui arrive en premier en contact de butée de position de référence provoquera le blocage du moteur correspondant. En raison de la dérivation aux bornes du moteur, cette grande résistance interne du moteur forcera le limiteur de pression en ouverture rendant la dérivation passante. Cette ouverture provoquera à travers la dérivation et par le conduit de liaison entre les moteurs résultant du montage en série l'alimentation directe de l'autre moteur qui, continuant à tourner, amènera la deuxième fourche en butée de point de référence.

Dans le cas d'une position de référence autre que des butées physiques, le moteur ne pouvant se bloquer sera commandé en arrêt.

Dans le cas d'une inclinaison jugée anormale, le chauffeur réajustera l'horizontalité du plateau en laissant aller la structure porteuse en position de référence. Il la ramènera ensuite à la position voulue pour l'utilisation souhaitée. Il pourra par exemple la laisser aller jusqu'en butée de fin de course haute 23 où le défaut d'horizontalité transversale se corrigera automatiquement dans le cas de la réalisation avec limiteur de pression.

Selon l'invention, il est aussi possible de commander en continu la synchronisation des deux fourches 8,9 par le contrôle permanent des positions de l'une et de l'autre des deux fourches à l'aide d'un indicateur de position, par exemple d'un compte-tours, puis d'exploiter l'information à l'aide d'un comparateur et/ou d'un calculateur pour commander en ouverture l'organe hydraulique de dérivation.

On peut également contrôler et corriger en continu la synchronisation par action de ralentissement sur le moteur qui est en avance sur son homologue. Pour ce faire, on peut utiliser dans la branche de dérivation une vanne commandée à ouverture variable, par exemple une électrovanne proportionnelle.

## Revendications

1. Dispositif de manoeuvre d'une structure porteuse en levage-abaissement ou en poussée-traction notamment pour une unité routière porte-véhicules, dispositif formé d'un couple de vis (4, 5) portant chacune un écrou de translation (6; 7) prisonnier à l'intérieur d'une fourche (8; 9) se déplaçant le long de chacun des poteaux d'un couple de poteaux, les vis (4, 5) étant entraînées chacune à l'une de leurs extrémités par un moteur hydraulique (16; 17), les deux moteurs hydrauliques étant alimentés en série à partir d'une même source de fluide sous pression caractérisé en ce que chacun des moteurs hydrauliques (16; 17) est shunté par une dérivation (37; 38) comportant un composant hydraulique à ouverture commandée ou automatique pour rendre la dérivation passante et courtcircuiter ainsi sur commande ou automatiquement partiellement ou totalement l'alimentation en fluide moteur de ce moteur hydraulique (16; 17) et en ce que l'on mesure en permanence les valeurs d'une grandeur physique représentant les positions instantanées de chaque écrou de translation (6; 7) de chaque vis (4; 5) par rapport à une référence définie par une valeur d'une grandeur physique représentative de cette position de référence et en ce que l'on compare ces valeurs entre elles dans un comparateur pour déterminer un décalage entre les positions instantanées des deux écrous de translation et pour commander, s'il est en avance, la progression de l'écrou dont le moteur d'actionnement hydraulique est courtcircuité en agissant sur la commande du composant hydraulique inséré dans la dérivation de courtcircuit au moins jusqu'à ce que le décalage entre les deux moteurs hydrauliques s'annule.

2. Dispositif de manoeuvre selon la revendication 1 caractérisé en ce que le contrôle en continu de la position de l'un et de l'autre des écrous de translation (6, 7) lors des manoeuvres d'abaissement et de levage s'effectue en ajustant en ralentissement le moteur hydraulique qui est en avance.

3. Dispositif de manoeuvre selon la revendication précédente caractérisé en ce que l'on ajuste en ralentissement le moteur qui est en avance en ouvrant de façon variable le composant hydraulique présent dans la dérivation.

4. Dispositif de manoeuvre selon les revendications 2 ou 3 caractérisé en ce que le composant hydraulique à ouverture commandée est une vanne simple ou à commande électrique.

5. Dispositif de manoeuvre selon la revendication précédente caractérisé en ce que la vanne est à ouverture variable.

6. Dispositif de manoeuvre selon la revendication 1 caractérisé en ce que la position de référence est au moins une des positions haute ou basse de butée de fin de course de la fourche ou de l'écrou de translation (6; 7).

7. Dispositif de manoeuvre selon la revendication 1 caractérisé en ce que la position de référence est une position intermédiaire.

8. Dispositif de manoeuvre selon la revendication 1 caractérisé en ce que le composant hydraulique à ouverture automatique est un limiteur de pression.

9. Dispositif de manoeuvre selon la revendication précédente caractérisé en ce que le limiteur de pression est un clapet antiretour.

10. Dispositif de manoeuvre selon la revendication 1 caractérisé en ce que le composant hydraulique de dérivation est commandé en ouverture lorsque la fourche (8; 9) arrive en butée de fin de course haute ou basse.

11. Dispositif de manoeuvre selon la revendication 1 caractérisé en ce que le composant hydraulique de dérivation est commandé en ouverture lorsque le passage de la fourche (8; 9) est détecté par un détecteur de position de référence.

12. Dispositif de manoeuvre selon la revendication 1 caractérisé en ce que chaque écrou de translation (6, 7) est monté dans la fourche (8; 9) par l'intermédiaire d'une liaison élastique.

13. Dispositif de manoeuvre selon la revendication 1 caractérisé en ce que les vis (4, 5) sont horizontales ou légèrement inclinées.

14. Dispositif de manoeuvre selon la revendication 1 caractérisé en ce que la position de référence est définie par un indicateur.

15. Dispositif de manoeuvre selon la revendication précédente caractérisé en ce que la position de référence est définie par un nombre de tours de vis.

16. Dispositif de manoeuvre selon la revendication 1 caractérisé en ce que chaque écrou de translation (6, 7) ou chaque fourche (8, 9) porte un élément détectable et en ce qu'un détecteur sensible à cet élément détectable est placé sur le trajet de l'écrou de translation ou de la fourche.

17. Dispositif de manoeuvre selon la revendication 16 caractérisé en ce que le détecteur est un détecteur de proximité.

## Patentansprüche

1. Betätigungsvorrichtung für eine heb- und senkbare oder mit Zug und Druck arbeitenden Tragstruktur, insbesondere für eine Straßenfahrzeugtransporteinheit, die von einem Paar von Spindeln (4, 5) gebildet ist, von denen jede eine Spindelmutter (6, 7) aufnimmt, die in einer entlang einer Stütze eines Paars von Stützen verschiebbaren Gabel (8, 9) eingeschlossen ist, und die an einem ihrer Enden jeweils von einem Hydraulikmotor (16, 17) angetrieben sind, die beide von einer gemeinsamen Druckflüssigkeitsquelle in Reihe gespeist sind, dadurch gekennzeichnet, daß jeder Hydraulikmotor (16, 17) durch eine Abzweigleitung (37, 38) mit einem hydraulischen, gesteuert oder automatisch öffnenden Bauglied überbrückt ist, um einen Durchfluß durch die Abzweigleitung zu ermöglichen und so die Versorgung dieses Hydraulikmotors (16, 17) mit der Druckflüssigkeit gesteuert oder automatisch teilweise oder vollständig kurzzuschließen, daß die Werte einer die momentane Position jeder Spindelmutter (6, 7) einer jeden Spindel bezüglich einer Bezugsposition, die durch einen für diese Bezugsposition repräsentativen Wert einer physikalischen Größe festgelegt ist, repräsentierenden physikalischen Größe kontinuierlich, meßbar sind, und daß diese Werte mittels eines Komparators verglichen werden, um einen Versatz zwischen der momentanen Position der beiden Spindelmuttern feststellen zu können und -im Falle eines Vorauseilens einer Mutter- den Vorschub dieser Mutter, deren hydraulischer Antriebsmotor kurzgeschlossen ist, durch Einwirken auf die Steuerung des in die Abzweigleitung zum Kurzschließen eingesetzten hydraulischen Bauglieds zumindest so lange zu steuern, bis der Versatz zwischen den beiden Hydraulikmotoren aufgehoben ist.

2. Betätigungsvorrichtung nach Anspruch 1, dadurch gekennzeichnet, daß die kontinuierliche Überwachung der Position der beiden Spindelmuttern (6, 7) während des Absenkens und des Anhebens durch einstellbares Verzögern des vorauseilenden Hydraulikmotors bewirkt ist.

3. Betätigungsvorrichtung nach dem vorangehenden Anspruch, dadurch gekennzeichnet, daß der vorauseilende Motor durch variables Öffnen des in der Abzweigleitung angeordneten hydraulischen Bauglieds einstellbar verzögerbar ist.

4. Betätigungsvorrichtung nach Anspruch 2 oder 3, dadurch gekennzeichnet, daß das gesteuert öffnende hydraulische Bauglied ein einfaches oder elektrisch gesteuertes Ventil ist.

5. Betätigungsvorrichtung nach dem vorangehenden Anspruch, dadurch gekennzeichnet, daß das Ventil ein Steuerventil ist.

6. Betätigungsvorrichtung nach Anspruch 1, dadurch gekennzeichnet, daß die Bezugsposition wenigstens eine obere oder untere Anschlagposition am Ende des Wegs der Gabel oder der Spindelmutter (6, 7) ist.

7. Betätigungsvorrichtung nach Anspruch 1, dadurch gekennzeichnet, daß die Bezugsposition eine Zwischenposition ist.

8. Betätigungsvorrichtung nach Anspruch 1, dadurch gekennzeichnet, daß das automatisch öffnende hydraulische Bauglied ein Druckbegrenzungsventil ist.

9. Betätigungsvorrichtung nach dem vorangehenden Anspruch, dadurch gekennzeichnet, daß das Druckbegrenzungsventil ein Rückschlagventil ist.

10. Betätigungsvorrichtung nach Anspruch 1, dadurch gekennzeichnet, daß das hydraulische Bauglied der Abzweigleitung während des Verschiebens der Gabel (8, 9) in Richtung des Anschlags am oberen oder unteren Ende des Hubs öffnungsgesteuert ist.

11. Betätigungsvorrichtung nach Anspruch 1, dadurch gekennzeichnet, daß die das hydraulische Bauglied der Abzweigleitung auf Öffnen gesteuert wird, wenn der Durchlauf der Gabel (8, 9) mittels eines Bezugspositionsgebers detektiert wird.

12. Betätigungsvorrichtung nach Anspruch 1, dadurch gekennzeichnet, daß jede Spindelmutter (6, 7) über eine nachgiebige Verbindung in die Gabel (8, 9) eingesetzt ist.

13. Betätigungsvorrichtung nach Anspruch 1, dadurch gekennzeichnet, daß die Spindeln (4, 5) horizontal oder geringfügig geneigt sind.

14. Betätigungsvorrichtung nach Anspruch 1, dadurch gekennzeichnet, daß die Bezugsposition von einem Anzeiger vorgegeben ist.

15. Betätigungsvorrichtung nach dem vorangehenden Anspruch, dadurch gekennzeichnet, daß die Bezugsposition durch eine Umdrehungszahl der Spindel vorgegeben ist.

16. Betätigungsvorrichtung nach Anspruch 1, dadurch gekennzeichnet, daß jede Spindelmutter (6, 7) oder jede Gabel (8, 9) mit einem Positionsgeber ausgestattet ist, und daß ein bezüglich dieses Positionsgebers empfindlicher Sensor an der Bewegungsbahn der Spindelmutter oder der Gabel angeordnet ist.

17. Betätigungsvorrichtung nach Anspruch 16, dadurch gekennzeichnet, daß der Sensor ein Näherungssensor ist.

## Claims

1. Control device for lifting/lowering or pushing/pulling a carrying structure, especially for a vehicle-carrying road unit, which device is formed by a pair of screws (4; 5) each carrying a displacement nut (6; 7) enclosed inside a fork (8; 9) moving along each of the posts of a pair of posts, the screws (4; 5) each being driven at one of their ends by a hydraulic motor (16; 17), the two hydraulic motors being supplied in series from the same source of pressurised fluid, characterised in that each of the hydraulic motors (16; 17) is connected in parallel with a shunt (37; 38) comprising a hydraulic component with controlled or automatic opening for making the shunt passable and thus partially or completely short-circuiting, on command or automatically, the supply of working fluid to the hydraulic motor (16; 17), and in that measurements are taken continuously of the values of a physical quantity representing the instantaneous positions of each displacement nut (6; 7) of each screw (4; 5) relative to a reference defined by a value of a physical quantity representing that reference position, and in that those values are compared with one another in a comparator in order to determine a difference between the instantaneous positions of the two displacement nuts and to control, if it is leading, the advance of the nut whose hydraulic actuating motor is short-circuited by acting on the control of the hydraulic component inserted in the short-circuit shunt at least until the difference in position between the two hydraulic motors is cancelled.

2. Control device according to claim 1, characterised in that the continuous control of the position of the one and the other of the displacement nuts (6; 7) during lowering and lifting manoeuvres is effected by adjusting the hydraulic motor that is leading in such a manner as to cause it to slow down.

3. Control device according to the preceding claim, characterised in that the motor that is leading is adjusted in such a manner as to cause it to slow down by opening in a variable manner the hydraulic component present in the shunt.

4. Control device according to claim 2 or 3, characterised in that the hydraulic component with controlled opening is a simple valve or an electrically controlled valve.

5. Control device according to the preceding claim, characterised in that the valve has variable opening.

6. Control device according to claim 1, characterised in that the reference position is at least one of the upper or lower limit stop positions of the fork or of the displacement nut (6; 7),

7. Control device according to claim 1, characterised in that the reference position is an intermediate position.

8. Control device according to claim 1, characterised in that the hydraulic component with automatic opening is a pressure limiter.

9. Control device according to the preceding claim, characterised in that the pressure limiter is a non-return valve.

10. Control device according to claim 1, characterised in that the shunt hydraulic component is caused to open when the fork (8; 9) reaches the upper or lower limit stop.

11. Control device according to claim 1, characterised in that the shunt hydraulic component is caused to open when the passage of the fork (8; 9) is detected by a reference position detector.

12. Control device according to claim 1, characterised in that each displacement nut (6; 7) is mounted in the fork (8; 9) by means of a resilient link.

13. Control device according to claim 1, characterised in that the screws (4; 5) are horizontal or slightly inclined.

14. Control device according to claim 1, characterised in that the reference position is defined by an indicator.

15. Control device according to the preceding claim, characterised in that the reference position is defined by a number of screw turns.

16. Control device according to claim 1, characterised in that each displacement nut (6; 7) or each fork (8; 9) carries a detectable member, and in that a detector sensitive to the detectable member is placed on the path of the displacement nut or of the fork.

17. Control device according to claim 16, characterised in that the detector is a proximity detector.
